(19) Europäisches Patentamt
European Patent Office
Office européen des brevets

(11) EP 0 738 747 A1

(12) **EUROPÄISCHE PATENTANMELDUNG**

(43) Veröffentlichungstag:
**23.10.1996 Patentblatt 1996/43**

(51) Int. Cl.[6]: **C08J 3/03**, C08L 83/04

(21) Anmeldenummer: **96106091.0**

(22) Anmeldetag: **18.04.1996**

(84) Benannte Vertragsstaaten:
**DE ES FR GB SE**

(30) Priorität: **20.04.1995 DE 19514665**

(71) Anmelder: **Wacker-Chemie GmbH**
**D-81737 München (DE)**

(72) Erfinder:
- **Müller, Johann**
**84489 Burghausen (DE)**
- **Mackenzie, Ian**
**Sale, Cheshire, M33 6PN (GB)**

(74) Vertreter: **Deffner-Lehner, Maria et al**
**Wacker-Chemie GmbH,**
**Hanns-Seidel-Platz 4**
**81737 München (DE)**

(54) **Wässrige Dispersionen von Organopolysiloxanen**

(57) Gegenstand der Erfindung sind wäßrige Dispersionen von Organopolysiloxanen, herstellbar unter Verwendung der Ausgangsstoffe

(A) kondensationsfähige Gruppen aufweisendes Organopolysiloxan,
(B) Kondensationskatalysator,
(C) Organopolysiloxanharz mit einem Molekulargewicht von maximal 20 000,
(D) basischen Stickstoff aufweisende Verbindungen und
(E) Polyvinylalkohol mit der Maßgabe, daß der Feststoffgehalt der Dispersionen 0,01 bis unter 30 Gew.% beträgt.

EP 0 738 747 A1

## Beschreibung

Die Erfindung betrifft wäßrige Dispersionen von Organopolysiloxanen, die sich nach Entfernen von Wasser in Elastomere überführen lassen, Verfahren zu deren Herstellung und deren Verwendung.

Maßnahmen zum Umweltschutz zwingen in zunehmendem Maße zur Vermeidung organischer Lösungsmittel in chemischen Zubereitungen. Demzufolge finden immer mehr wäßrige Systeme Verwendung.

Wäßrige Dispersionen von Organopolysiloxanen sind an sich vielfach bekannt. Beispielsweise wird in US-PS 4,221,688 (R.D. Johnson, Dow Corning Corporation; ausgegeben am 9. September 1980) die Herstellung von wäßrigen Silicondispersionen auf der Basis von hydroxyliertem Diorganopolysiloxan, kolloidalem Siliciumdioxid und einem organischen Amin oder Natriumhydroxid beschrieben.

Aus US-PS 4,244,849 (J.C. Saam, Dow Corning Corporation; ausgegeben am 13. Januar 1981) sind wäßrige Silicondispersionen bekannt, die durch Zugabe von Alkalisilicat zu einer anionisch stabilisierten wäßrigen Emulsion von Hydroxyendgruppen aufweisendem Polydiorganosiloxan erhalten werden. In US-PS 4,816,506 (N. Gamon, Wacker-Chemie GmbH; ausgegeben am 28. März 1989) sowie US-PS 5,045,231 (R. Braun, Wacker-Chemie GmbH; ausgegeben am 3. September 1991) bzw. der entsprechenden DE 39 32 025 A (ausgegeben am 4. April 1991) sind wäßrige Dispersionen dargelegt, die zusätzlich zu in den endständigen Einheiten Hydroxylgruppen aufweisenden Polydiorganosiloxanen und (Organo)metallverbindungen Siliconat enthalten. In EP 366 133 A wird ein Verfahren zur Herstellung von wäßrigen Emulsionen von festen Organopolysiloxanen ohne Verwendung organischer Lösungsmittel beschrieben, indem das feste Siloxan in einem flüssigen Siloxan gelöst und diese Lösung emulgiert wird. In EP 572 006 werden wäßrige Dispersionen beschrieben, die sich von den erfindungsgemäßen Dispersionen dadurch unterscheiden, daß sie einen höheren Feststoffgehalt aufweisen und daß für mit diesen Dispersionen beschichtete Gewebe keine Formstabilität, Elastizität, knitterfreie Ausrüstung und Verfestigung von Glasfasergeweben möglich ist.

Es bestand die Aufgabe, wäßrige Dispersionen von Organopolysiloxanen bereitzustellen, die stabil, transparent und ohne lange Lagerung gebrauchsfertig sind, und die es erlauben, auf relativ einfache Weise sowie innerhalb kurzer Zeit Elastomere herzustellen. Des weiteren bestand die Aufgabe, elastische Gewebe mit einem weichen Griff, formstabile Gewebe, knitterfreie Gewebe sowie Glasfasergewebe mit verbesserten Eigenschaften, ohne aufwendige Verfahren, zu schaffen. Diese Aufgabe wird durch die Erfindung gelöst.

Gegenstand der Erfindung sind wäßrige Dispersionen von Organopolysiloxanen, herstellbar unter Verwendung der Ausgangsstoffe

(A) kondensationsfähige Gruppen aufweisendes Organopolysiloxan,
(B) Kondensationskatalysator,
(C) Organopolysiloxanharz mit einem Molekulargewicht von maximal 20 000,
(D) basischen Stickstoff aufweisende Verbindungen und
(E) Polyvinylalkohol mit der Maßgabe, daß der Feststoffgehalt der Dispersionen 0,01 bis unter 30 Gew.% beträgt.

Die erfindungsgemäß eingesetzten, kondensationsfähige Gruppen aufweisenden Organopolysiloxane (A) sind vorzugsweise solche der Formel

$$RO\text{-}[SiR^1{}_2O]_n\text{-}R \qquad (I),$$

worin

R gleich oder verschieden sein kann und Wasserstoffatom oder Alkylrest mit 1 bis 6 Kohlenstoffatom(en) bedeutet,
$R^1$ gleiche oder verschiedene Kohlenwasserstoffreste mit 1 bis 18 Kohlenstoffatom(en), die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet und
n eine ganze Zahl von mindestens 30 ist.

Beispiele für Kohlenwasserstoffreste $R^1$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste $R^1$ sind halogenierte Reste wie der 3-Chlorpropylrest, der 3,3,3-Trifluorpropylrest, Chlorphenylreste, Hexafluorpropylreste, wie der 1-Trifluormethyl-2,2,2-trifluorethylrest; der 2-(Perfluorhexyl)ethylrest, der 1,1,2,2-Tetrafluorethyloxypropylrest, der 1-Trifluormethyl-2,2,2-trifluorethyloxypropylrest, der Perfluorisopropyloxyethylrest, der Perfluorisopropyloxypropylrest; durch Aminogruppen substituierte Reste, wie der N-(2-aminoethyl)-3-aminopropylrest, der 3-Aminopropylrest und der 3-(Cyclohexylamino)propylrest; etherfunktionelle Reste, wie der 3-Methoxypropylrest und der 3-Ethoxypropylrest; cyanofunktionelle Reste, wie der 2-Cyanoethylrest; esterfunktionelle Reste, wie der Methacryloxypropylrest; epoxyfunktionelle Reste, wie der Glycidoxypropylrest und schwefelfunktionelle Reste, wie der 3-Mercaptopropylrest.

Bevorzugt als Reste $R^1$ sind Kohlenwasserstoffreste mit 1 bis 10 Kohlenstoffatom(en), wobei besonders bevorzugt mindestens 80 %, insbesondere mindestens 90 %, der Reste $R^1$ Methylreste sind.

Bevorzugte Reste R sind Wasserstoffatom und Alkylgruppen mit 1 bis 4 Kohlenstoffatom(en), wobei Wasserstoffatom, Methyl- und Ethylreste besonders bevorzugt sind.

Der Durchschnittswert für die Zahl n in Formel (I) ist vorzugsweise so gewählt, daß das Organopolysiloxan der Formel (I) eine Viskosität von mehr als 30 mPa • s, insbesondere von mehr als 10 000 mPa • s, jeweils gemessen bei einer Temperatur von 25°C, besitzt.

Obwohl in Formel (I) nicht angegeben, können bis zu 10 Molprozent der Diorganosiloxaneinheiten durch andere, meist jedoch nur als mehr oder weniger schwer vermeidbare Verunreinigungen vorliegende Siloxaneinheiten, wie $R^1{}_3SiO_{1/2}$-, $R^1SiO_{3/2}$- und $SiO_{4/2}$-Einheiten, ersetzt sein, wobei $R^1$ die vorstehend dafür angegebene Bedeutung hat.

Die Polydiorganosiloxane gemäß Formel (I) können nach in der Fachwelt bekannten Verfahren, beispielsweise durch Polymerisation bzw. Kondensation niedermolekularer cyclischer bzw. linearer, hydroxy- und/oder alkoxyendblokkierter Organopolysiloxane, hergestellt werden.

Hierzu sei beispielsweise auf W. Noll, "Chemistry and Technology of Silicones", 1968, Academic Press Inc., Seite 218 ff verwiesen.

Bei dem erfindungsgemäß eingesetzten, kondensationsfähige Gruppen aufweisenden Organopolysiloxan (A) kann es sich um eine einzelne Art wie auch um ein Gemisch aus mindestens zwei Arten derartiger kondensationsfähige Gruppen aufweisender Organopolysiloxane handeln.

Bei dem erfindungsgemäß eingesetzten Kondensationskatalysator (B) handelt es sich vorzugsweise um (Organo-)Metallverbindungen, wie beispielsweise die Salze von Carbonsäuren, die Alkoholate und die Halogenide der Metalle Pb, Zn, Zr, Ti, Sb, Fe, Cd, Sn, Ba, Ca und Mn. Besonders bevorzugt sind (Organo-)Zinnverbindungen von Carbonsäuren mit 1 bis 18 Kohlenstoffatom(en) sowie (Organo-)Zinnhalogenide, insbesondere Organozinnoctoate, -naphthenate, -hexoate, -laurate, -acetate, -bromide und -chloride.

Beispiele für solche (Organo-)Zinnverbindungen sind Zinn(II)octoat, Dibutylzinndilaurat, Octylzinntriacetat, Dioctylzinndioctoat, Dioctylzinndiacetat, Didecylzinndiacetat, Dibutylzinndiacetat, Dibutylzinndibromid, Dioctylzinndilaurat, Trioctylzinnacetat. Ganz besonders bevorzugt sind Diorganozinndicarboxylate, insbesondere Dibutylzinndilaurat, Dioctylzinndilaurat, Dibutylzinndiacetat und Dioctylzinndiacetat.

Bei dem erfindungsgemäß eingesetzten Kondensationskatalysator (B) kann es sich um eine einzelne Art wie auch um ein Gemisch aus mindestens zwei Arten derartiger Kondensationskatalysatoren handeln.

Zur Herstellung der erfindungsgemäßen wäßrigen Dispersionen von Organopolysiloxanen wird Kondensationskatalysator (B) in Mengen von vorzugsweise 0,01 bis 7 Gewichtsteilen, besonders bevorzugt 0,05 bis 2,0 Gewichtsteilen, jeweils bezogen auf 100 Gewichtsteile kondensationsfähige Gruppen aufweisendes Organopolysiloxan (A), eingesetzt.

Das erfindungsgemäß eingesetzte Organopolysiloxanharz (C) ist vorzugsweise solches aus Einheiten der allgemeinen Formel

$$R^2{}_aSiO_{\frac{4-a}{2}} \qquad (II),$$

wobei $R^2$ eine der Bedeutungen wie $R^1$ hat und a eine Zahl mit einem durchschnittlichen Wert zwischen 0,5 und 1,95, insbesondere zwischen 0,8 und 1,8, bedeutet.

Obwohl durch die Formel (II) nicht ausgedrückt, kann das Organopolysiloxanharz, bedingt durch seine Herstellung, bis zu 10 Gewichtsprozent Si-gebundene Hydroxylgruppen und/oder Chloratome und/oder Alkoxygruppen enthalten.

Bevorzugte Reste $R^2$ in Formel (II) sind Methyl-, Ethyl-, Vinyl- und Phenylreste, insbesondere Methylreste.

Das erfindungsgemäß eingesetzte Organopolysiloxanharz (C) hat ein Molekulargewicht von bevorzugt höchstens 10 000, besonders bevorzugt höchstens 4 000.

Beispiele für die erfindungsgemäß eingesetzten Organopolysiloxanharze (C) sind solche aus Einheiten der Formel $[CH_3SiO_{3/2}]$ und $[(CH_3)_2SiO]$ (TD-Harz C) sowie solche aus Einheiten der Formel $[(CH_3)_3SiO_{1/2}]$ und $[SiO_{4/2}]$ (MQ-Harz C).

Besonders bevorzugt handelt es sich bei dem erfindungsgemäß eingesetzten Organopolysiloxanharz (C) um solches der Formel $[CH_3SiO_{3/2}]_{0,6-0,8}$ $[(CH_3)_2SiO]_{0,2-0,4}$ mit einem durchschnittlichen Molekulargewicht zwischen 2500 und 3500 sowie der Formel $[(CH_3)_3SiO_{1/2}]_{0,4-0,6}$ $[SiO_{4/2}]_{0,4-0,6}$ mit einem durchschnittlichen Molekulargewicht zwischen

200 und 10 000 (MQ-Harz C), insbesondere um $[CH_3SiO_{3/2}]_{0,6-0,8}$ $[(CH_3)_2SiO]_{0,2-0,4}$ mit einem durchschnittlichen Molekulargewicht zwischen 500 und 6 000.

Das erfindungsgemäß eingesetzte Organopolysiloxanharz (C) ist in einem Einsatzbereich von bis zu 50 Gewichtsprozent, bezogen auf das Gewicht an Organopolysiloxan (A), zumindest zum Teil, vorzugsweise jedoch völlig, in Organopolysiloxan (A) löslich.

Liegt der Gehalt an $[CH_3SiO_{3/2}]$-Einheiten im (TD-Harz C) unter etwa 40 Mol-%, so ist das (TD-Harz C) mehr oder weniger unbegrenzt in Organopolysiloxan (A) löslich. Mit einem steigenden Gehalt an $[CH_3SiO_{3/2}]$-Einheiten nimmt die Löslichkeit ab, wobei (TD-Harze C) mit einem Gehalt an $[CH_3SiO_{3/2}]$-Einheiten von etwa 80 Mol-% im allgemeinen immer noch in ausreichender Menge im Organopolysiloxan (A) löslich sind.

Liegt der Gehalt an $[(CH_3)_3SiO_{1/2}]$-Einheiten im (MQ-Harz C) über etwa 50 Mol-%, so ist das (MQ-Harz C) mehr oder weniger unbegrenzt in Organopolysiloxan (A) löslich.

Das erfindungsgemäß eingesetzte Organopolysiloxanharz (C) kann nach an sich bekannten Verfahren, wie beispielsweise durch Kondensation von niedermolekularen Organopolysiloxanharzen in Dispersion, hergestellt werden, wobei die niedermolekularen Organopolysiloxanharze darstellbar sind durch Solvolyse und Kondensation von einer Lösung der entsprechenden Silane mit Si-gebundenen Chloratomen in einem mit Wasser nicht mischbaren Lösungsmittel mittels eines Alkohol/Wasser-Gemisches. Hierzu sei beispielsweise auf W. Noll, "Chemistry and Technology of Silicones"; Academic Press, Orlando, 1968, Seiten 190 bis 208, verwiesen.

Bei dem erfindungsgemäß eingesetzten Organopolysiloxanharz (C) kann es sich um eine einzelne Art wie auch um ein Gemisch aus mindestens zwei Arten derartiger Organopolysiloxanharze handeln.

Zur Herstellung der erfindungsgemäßen wäßrigen Dispersionen von Organopolysiloxanen wird Organopolysiloxanharz (C) in Mengen von vorzugsweise 0,1 bis 100 Gewichtsteilen, besonders bevorzugt 0,5 bis 35 Gewichtsteilen, jeweils bezogen auf 100 Gewichtsteile kondensationsfähige Gruppen aufweisendes Organopolysiloxan (A), eingesetzt.

Bei den erfindungsgemäß eingesetzten, basischen Stickstoff aufweisenden Verbindungen (D) handelt es sich vorzugsweise um solche ausgewählt aus der Gruppe bestehend aus Verbindungen der Formel

$$NR^3_3 \qquad \text{(III)},$$

wobei $R^3$ gleich oder verschieden sein kann und Wasserstoffatom oder Kohlenwasserstoffreste mit 1 bis 18 Kohlenstoffatom(en), die gegebenenfalls mit Hydroxygruppen, Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet,
mit der Maßgabe, daß in Formel (III) höchstens zwei $R^3$ die Bedeutung von Wasserstoffatom haben,
aliphatische cyclische Amine, wie beispielsweise Piperidin und Morpholin sowie
Organosiliciumverbindungen mit mindestens einem basischen Stickstoff aufweisenden organischen Rest aus Einheiten der Formel

$$R^4_bY_cSi(OR^5)_dO_{\frac{4-b-c-d}{2}} \qquad \text{(IV)},$$

worin

| | |
|---|---|
| $R^4$ | gleich oder verschieden sein kann und einen einwertigen, von basischem Stickstoff freien organischen Rest bedeutet, |
| $R^5$ | gleich oder verschieden sein kann und Wasserstoffatom, einen Alkylrest, Alkalimetallkation, Ammonium- oder Phosphoniumgruppe bedeutet, |
| Y | gleich oder verschieden sein kann und einen einwertigen, SiC-gebundenen Rest mit basischem Stickstoff bedeutet, |
| b | 0, 1, 2, oder 3, |
| c | 0, 1, 2, 3 oder 4 und |
| d | 0, 1, 2 oder 3 ist, |

mit der Maßgabe, daß die Summe aus b, c und d kleiner oder gleich 4 ist und pro Molekül mindestens ein Rest Y anwesend ist.

Bei Rest $R^4$ handelt es sich vorzugsweise um Kohlenwasserstoffreste mit 1 bis 18 Kohlenstoffatome(en), wobei der Methyl-, Ethyl- und Propylrest besonders bevorzugt sind, insbesondere der Methylrest.

Beispiele für Rest $R^4$ sind die für $R^1$ angegebenen Beispiele für Kohlenwasserstoffreste.

Vorzugsweise handelt es sich bei Rest $R^5$ um Wasserstoffatom, Methyl-, Ethylrest und Alkalimetallkation, wobei Wasserstoffatom, Methyl-, Ethylrest, Natrium- und Kaliumkation besonders bevorzugt sind.

Beispiele für Rest $R^5$ sind die für Rest R angegebenen Kohlenwasserstoffreste, die Kationen der Alkalimetalle, wie die von Lithium, Natrium, Kalium, Rubidium und Cäsium, sowie Reste der Formel

$$^{+}NR^6_4 \quad (V)$$

oder

$$^{+}PR^6_4 \quad (VI),$$

wobei $R^6$ gleich oder verschieden sein kann und Kohlenwasserstoffrest mit 1 bis 6 Kohlenstoffatom(en) bedeutet.

Vorzugsweise sind die Reste Y solche der Formel

$$R^7_2NR^8- \quad (VII),$$

worin $R^7$ gleich oder verschieden sein kann und Wasserstoff, Alkyl-, Cycloalkyl- oder Aminoalkylreste bedeutet und $R^8$ zweiwertiger Kohlenwasserstoffrest bedeutet.

Die Beispiele für Alkyl- und Cycloalkylreste $R^1$ gelten im vollen Umfang auch für Alkyl- bzw. Cycloalkylreste $R^7$.

Vorzugsweise ist an jedes Stickstoffatom in den Resten der Formel (VII) mindestens ein Wasserstoffatom gebunden.

Bevorzugt handelt es sich bei Rest $R^8$ um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest $R^8$ sind der Methylen-, Ethylen-, Propylen-, Butylen-, Cyclohexylen-, Octadecylen-, Phenylen- und Butenylenrest.

Beispiele für Reste Y sind
$H_2N(CH_2)_3$-,
$H_2N(CH_2)_2NH(CH_2)_2$-,
$H_2N(CH_2)_2NH(CH_2)_3$-,
$H_2N(CH_2)_2$-,
$H_3CNH(CH_2)_3$-,
$C_2H_5NH(CH_2)_3$-,
$H_3CNH(CH_2)_2$-,
$C_2H_5NH(CH_2)_2$-,
$H_2N(CH_2)_4$-,
$H_2N(CH_2)_5$-,
$H(NHCH_2CH_2)_3$-,
$C_4H_9NH(CH_2)_2NH(CH_2)_2$-,
cyclo-$C_6H_{11}NH(CH_2)_3$-,
cyclo-$C_6H_{11}NH(CH_2)_2$-,
$(CH_3)_2N(CH_2)_3$- ,
$(CH_3)_2N(CH_2)_2$- ,
$(C_2H_5)_2N(CH_2)_3$- und
$(C_2H_5)_2N(CH_2)_2$- .

Bevorzugt handelt es sich bei Y um $H_2N(CH_2)_3$-, $H_2N(CH_2)_2NH(CH_2)_3$-, $H_3CNH(CH_2)_3$-, $C_2H_5NH(CH_2)_3$- und cyclo-$C_6H_{11}NH(CH_2)_3$-, wobei $H_2N(CH_2)_2NH(CH_2)_3$- und cyclo-$C_6H_{11}NH(CH_2)_3$- besonders bevorzugt sind.

Handelt es sich bei den Organosiliciumverbindungen aus Einheiten der Formel (IV) um Silane, so ist b bevorzugt 0, 1 oder 2, besonders bevorzugt 0 oder 1, c bevorzugt 1 oder 2, besonders bevorzugt 1, und d bevorzugt 1, 2 oder 3, besonders bevorzugt 2 oder 3, mit der Maßgabe, daß die Summe aus b, c und d gleich 4 ist.

Beispiele für die erfindungsgemäßen Silane der Formel (IV) sind
$H_2N(CH_2)_3$-$Si(OCH_3)_3$
$H_2N(CH_2)_3$-$Si(OC_2H_5)_3$
$H_2N(CH_2)_3$-$Si(OCH_3)_2CH_3$
$H_2N(CH_2)_3$-$Si(OC_2H_5)_2CH_3$
$H_2N(CH_2)_3$-$Si(OH)_{3-x}(OM)_x$
$H_2N(CH_2)_3$-$Si(OH)_{2-y}(OM)_yCH_3$
$H_2N(CH_2)_2NH(CH_2)_3$-$Si(OCH_3)_3$
$H_2N(CH_2)_2NH(CH_2)_3$-$Si(OC_2H_5)_3$
$H_2N(CH_2)_2NH(CH_2)_3$-$Si(OCH_3)_2CH_3$
$H_2N(CH_2)_2NH(CH_2)_3$-$Si(OC_2H_5)_2CH_3$
$H_2N(CH_2)_2NH(CH_2)_3$-$Si(OH)_{3-x}(OM)_x$
$H_2N(CH_2)_2NH(CH_2)_3$-$Si(OH)_{2-y}(OM)_yCH_3$
cyclo-$C_6H_{11}NH(CH_2)_3$-$Si(OCH_3)_3$
cyclo-$C_6H_{11}NH(CH_2)_3$-$Si(OC_2H_5)_3$

cyclo-$C_6H_{11}NH(CH_2)_3$-$Si(OCH_3)_2CH_3$
cyclo-$C_6H_{11}NH(CH_2)_3$-$Si(OC_2H_5)_2CH_3$
cyclo-$C_6H_{11}NH(CH_2)_3$-$Si(OH)_{3-x}(OM)_x$ und
cyclo-$C_6H_{11}NH(CH_2)_3$-$Si(OH)_{2-y}(OM)_yCH_3$ ,
wobei
$H_2N(CH_2)_2NH(CH_2)_3$-$Si(OCH_3)_3$
$H_2N(CH_2)_2NH(CH_2)_3$-$Si(OC_2H_5)_3$
$H_2N(CH_2)_2NH(CH_2)_3$-$Si(OCH_3)_2CH_3$
$H_2N(CH_2)_2NH(CH_2)_3$-$Si(OC_2H_5)_2CH_3$
$H_2N(CH_2)_2NH(CH_2)_3$-$Si(OH)_{3-x}(ONa)_x$
$H_2N(CH_2)_2NH(CH_2)_3$-$Si(OH)_{2-y}(ONa)_yCH_3$
cyclo-$C_6H_{11}NH(CH_2)_3$-$Si(OCH_3)_3$
cyclo-$C_6H_{11}NH(CH_2)_3$-$Si(OC_2H_5)_3$
cyclo-$C_6H_{11}NH(CH_2)_3$-$Si(OCH_3)_2CH_3$
cyclo-$C_6H_{11}NH(CH_2)_3$-$Si(OC_2H_5)_2CH_3$
cyclo-$C_6H_{11}NH(CH_2)_3$-$Si(OH)_{3-x}(ONa)_x$ sowie
cyclo-$C_6H_{11}NH(CH_2)_3$-$Si(OH)_{2-y}(ONa)_yCH_3$ bevorzugt und
$H_2N(CH_2)_2NH(CH_2)_3$-$Si(OCH_3)_3$
$H_2N(CH_2)_2NH(CH_2)_3$-$Si(OCH_3)_2CH_3$
cyclo-$C_6H_{11}NH(CH_2)_3$-$Si(OCH_3)_3$
cyclo-$C_6H_{11}NH(CH_2)_3$-$Si(OCH_3)_2CH_3$
$H_2N(CH_2)_2NH(CH_2)_3$-$Si(OH)_{3-x}(ONa)_x$ und
$H_2N(CH_2)_2NH(CH_2)_3$-$Si(OH)_{2-y}(ONa)_yCH_3$ besonders bevorzugt sind, mit x gleich 0, 1, 2 oder 3, y gleich 0, 1 oder 2 und M gleich Kation des Natriums oder Kaliums.

Silane der Formel (IV) sind handelsübliche Produkte und können nach in der Siliciumchemie gängigen Verfahren hergestellt werden. Hierzu sei beispielsweise auf W. Noll "Chemie und Technologie der Silicone", 1968, Verlag Chemie, Seite 149 f, verwiesen.

Falls es sich bei der Organosiliciumverbindung aus Einheiten der Formel (IV) um Organopolysiloxane handelt, ist der durchschnittliche Wert von b vorzugsweise zwischen 0,5 und 2,5, besonders bevorzugt zwischen 1,4 und 2,0, der durchschnittliche Wert von c vorzugsweise zwischen 0,01 und 1,0, besonders bevorzugt zwischen 0,01 und 0,6 und der durchschnittliche Wert von d vorzugsweise zwischen 0 und 2,0, besonders bevorzugt zwischen 0 und 0,2, mit der Maßgabe, daß die Summe aus b, c und d kleiner oder gleich 3 ist.

Die erfindungsgemäß eingesetzten Organopolysiloxane aus Einheiten der Formel (IV) haben eine Viskosität bei 25°C von vorzugsweise 5 bis $10^5$ mPa • s, besonders bevorzugt von 10 bis $10^4$ mPa • s.

Beispiele für die erfindungsgemäß eingesetzten Organopolysiloxane aus Einheiten der Formel (IV) sind

$$(CH_3)_3SiO\,[(CH_3)_2SiO]_k\,[\overset{\overset{\displaystyle H_2N(CH_2)_2NH(CH_2)_3}{|}}{CH_3SiO}]_m\,Si(CH_3)_3 \qquad \text{(IVa)}$$

und

$$(CH_3)_3SiO\,[(CH_3)_2SiO]_k\,[\overset{\overset{\displaystyle \text{cyclo-}C_6H_{11}NH(CH_2)_3}{|}}{CH_3SiO}]_m\,Si(CH_3)_3 \qquad \text{(IVb)},$$

wobei das Verhältnis von k zu m zwischen 2:3 und 9:1 und die Summe von k und m zwischen 10 und 1000 liegt, sowie

$$\begin{array}{l} H_2N(CH_2)_2NH(CH_2)_3 \\ \qquad\qquad\qquad | \\ [(CH_3)_2SiO]_o\ [SiO_{3/2}]_p\ [(CH_3)_3SiO_{1/2}]_r \end{array}$$ (IVc) und

$$\begin{array}{l} cyclo\text{-}C_6H_{11}NH(CH_2)_3 \\ \qquad\qquad\qquad | \\ [(CH_3)_2SiO]_o\ [SiO_{3/2}]_p\ [(CH_3)_3SiO_{1/2}]_r \end{array}$$ (IVd),

wobei die Summe aus o+p+r zwischen 10 und 1000, das Verhältnis von o : (o+p+r) zwischen 0 und 0,9, insbesondere zwischen 0,2 und 0,7, das Verhältnis von p : (o+p+r) zwischen 0,05 und 0,6, insbesondere zwischen 0,1 und 0,5, und das Verhältnis von r : (o+p+r) zwischen 0,05 und 0,75, insbesondere zwischen 0,2 und 0,6, liegt.

Bevorzugt handelt es sich bei dem erfindungsgemäß eingesetzten Organopolysiloxan aus Einheiten der Formel (IV) um Organopolysiloxane der Formeln (IVa), (IVb), (IVc) und (IVd), mit einer Viskosität von 20 bis 100 000 mPa • s und einer Aminzahl von 0,01 bis 4,5, wobei solche Organopolysiloxane mit einer Viskosität von 100 bis 10 000 mPa • s und einer Aminzahl von 0,1 bis 1,5 besonders bevorzugt sind.

Die Aminzahl entspricht zahlenmäßig dem Wert, der den Verbrauch in ml von 1-n HCl bei der Neutralisation von 1 g Aminosiloxan angibt.

Organopolysiloxane aus Einheiten der Formel (IV) sind handelsübliche Produkte und können nach in der Siliciumchemie gängigen Verfahren hergestellt werden. Hierzu sei beispielsweise auf W. Noll, "Chemie und Technologie der Silicone", 1968, Verlag Chemie, Seite 194 ff, verwiesen.

Beispiele für Amine der Formel (III) sind Cyclohexylamin, Triethylamin, Dodecylamin, Diethyl-n-propylamin, Cyclohexylmethylamin, 2-Aminoethanol, 2-Amino-n-propanol, 2-Amino-2-methyl-1-propanol, 2-Dimethylamino-2-methyl-1-propanol, N,N-Diethylethanolamin, N,N-Dimethylethanolamin und Anilin, wobei Dodecylamin, 2-Aminoethanol und 2-Amino-2-methyl-1-pro-panol bevorzugt und 2-Amino-2-methyl-1-propanol besonders bevorzugt sind.

Bevorzugt werden als Konponente (D) Organosiliciumverbindungen mit mindestens einem basischen Stickstoff aufweisenden organischen Rest aus Einheiten der Formel (IV), insbesondere Kalium-N-(2-aminoethyl)-3-aminopropylmethylsilanolat, Natrium-N-(2-aminoethyl)-3-aminopropylmethylsilanolat, sowie Verbindungen der Formeln (IVa) und (IVc) eingesetzt.

Bei der erfindungsgemäß eingesetzten basischen Stickstoff aufweisenden Verbindung (D) kann es sich um eine einzelne Art wie auch um ein Gemisch aus mindestens zwei Arten derartiger Verbindungen handeln.

Zur Herstellung der erfindungsgemäßen wäßrigen Dispersionen von Organopolysiloxanen wird basischen Stickstoff aufweisende Verbindung (D) in Mengen von vorzugsweise 0,1 bis 5,0 Gewichtsteilen, besonders bevorzugt 0,5 bis 2,0 Gewichtsteilen, jeweils bezogen auf 100 Gewichtsteile kondensationsfähige Gruppen aufweisendes Organopolysiloxan (A), eingesetzt.

Als Komponente (E) werden bevorzugt Polyvinylalkohole mit einem Molekulargewicht zwischen 20 000 und 100 000 und einer Verseifungszahl von größer 100 eingesetzt.

Zur Herstellung der erfindungsgemäßen wäßrigen Dispersionen von Organopolysiloxanen wird Komponente (E) in Mengen von vorzugsweise 0,5 bis 10 Gewichtsteilen, besonders bevorzugt 1 bis 5 Gewichtsteilen, jeweils bezogen auf 100 Gewichtsteile kondensationsfähige Gruppen aufweisendes Organopolysiloxan (A), eingesetzt.

Ferner können die erfindungsgemäßen wäßrigen Dispersionen von Organopolysiloxanen weitere Komponenten, vorzugsweise ausgewählt aus der Gruppe der Weichmacher, Schaumverhütungsmittel, Pigmente, löslichen Farbstoffe, Fungizide, Riechstoffe sowie der organischen, in bezug auf die Dispersionen inerten Lösungsmittel, enthalten.

Beispiele für Weichmacher sind bei Raumtemperatur flüssige, durch Trimethylsiloxygruppen endblockierte Dimethylpolysiloxane mit einer Viskosität von mindestens 10 mPa • s.

Beispiele für organische, in bezug auf die Dispersionen inerte Lösungsmittel sind Kohlenwasserstoffe, wie Petrolether verschiedener Siedebereiche, n-Pentan, n-Hexan, Hexan-Isomerengemisch, Toluol und Xylol.

Von jeder der vorstehend als weitere Komponente für die erfindungsgemäßen wäßrigen Dispersionen genannten Gruppen von Stoffen kann jeweils als eine Komponente ein Stoff dieser Gruppe oder auch ein Gemisch aus mindestens zwei verschiedenen dieser Stoffe verwendet werden.

Bei den erfindungsgemäßen wäßrigen Dispersionen von Organopolysiloxanen werden Feststoffgehalte von bis zu 30 Gewichtsprozent erreicht. Als Feststoffgehalt ist hier der Gewichtsanteil aller Bestandteile der Dispersion außer Wasser und, falls verwendet, organischem Lösungsmittel am Gesamtgewicht der Dispersion zu verstehen. Vorzugsweise haben die erfindungsgemäßen wäßrigen Dispersionen von Organopolysiloxanen Feststoffgehalte von 0,01 bis unter 30 Gewichtsprozent, besonders bevorzugt von 0,1 bis 20 Gewichtsprozent, ganz besonders bevorzugt sind Mengen im Bereich von 0,5 bis 15 Gewichtsprozent. Wasser wird bevorzugt in Mengen von 30 bis 99,99 Gewichtsprozent, besonders bevorzugt von 80 bis 99,90 Gewichtsprozent und ganz besonders bevorzugt von 85 bis 99,50 Gewichtsprozent eingesetzt. Üblicherweise wird vollentsalztes oder destilliertes Wasser verwendet. Sofern keine störenden Verunreinigungen, Salze oder Chemikalien enthalten sind, kann auch Leitungswasser verwendet werden.

Wässrige Farbstoffdispersionen können in einem Mengenbereich von 0,01 bis 3 Gewichtsprozent verwendet werden.

Die erfindungsgemäßen wäßrigen Dispersionen von Organopolysiloxanen können in der gleichen Weise hergestellt werden, in der auch bisher wäßrige Dispersionen von Organopolysiloxanen hergestellt werden.

Die bevorzugte Arbeitsweise zur Herstellung der erfindungsgemäßen wäßrigen Dispersionen besteht darin, daß Organopolysiloxanharz (C) in dem kondensationsfähige Gruppen aufweisenden Organopolysiloxan (A) gelöst wird und mit Polyvinylalkohol (E) und Wasser sowie gegebenenfalls den weiteren Komponenten emulgiert wird.

Die übrigen Komponenten werden, falls sie wasserlöslich sind, entweder gleich in dem zum Emulgieren verwendeten Wasser gelöst oder der wäßrigen Dispersion zugesetzt. Die wasserunlöslichen Komponenten werden entweder als Dispersion eingesetzt oder zusammen mit der Lösung von Komponente (C) und Komponente (A) emulgiert.

Das Emulgieren bzw. Dispergieren kann in üblichen, zur Herstellung von Emulsionen bzw. Dispersionen geeigneten Mischgeräten, wie beispielsweise schnellaufenden Stator-Rotor-Rührgeräten nach Prof. P. Willems, bekannt unter dem registrierten Warenzeichen "Ultra-Turrax", erfolgen. Hierzu sei noch auf Ullmanns Encyklopädie der Technischen Chemie, Urban & Schwarzenberg, München, Berlin, 3. Auflage, Band 1, Seite 720 ff, verwiesen.

Die erfindungsgemäßen wäßrigen Dispersionen haben eine Viskosität von vorzugsweise 1,5 bis 15000 mPa • s, besonders bevorzugt von 1,5 bis 5000 und ganz besonders bevorzugt von 1,5 bis 1000 mPa • s.

Die erfindungsgemäßen wäßrigen Dispersionen von Organopolysiloxanen können für alle Zwecke eingesetzt werden, für die auch bisher wäßrige Dispersionen von Organopolysiloxanen verwendet werden. Sie können beispielsweise als Dichtungsmassen, Farben, Anstrichsysteme und als elektrisch isolierende bzw. leitende, hydrophobe, klebrige Stoffe abweisende Beschichtungssysteme oder als Grundlage bzw. Zusätze zu solchen Systemen dienen. Vorzugsweise können die erfindungsgemäßen Dispersionen zum Durchtränken von Geweben, Gestricken, Geflechten, Gelegen oder Vliesen, unter Verwendung von in der Textilindustrie üblichen Geräten, verwendet werden.

Die erfindungsgemäßen wäßrigen Dispersionen von Organopolysiloxanen härten schon bei Raumtemperatur innerhalb kurzer Zeit nach Verdampfen des Lösungsmittelanteils, Wassers und ggf. organischen Lösungsmittels, zu Elastomeren aus.

Die erfindungsgemäßen wäßrigen Dispersionen, insbesondere solche, die unter Verwendung von Polyvinylalkoholen hergestellt wurden, haben den Vorteil, daß sie in dünnen Schichten zu transparenten Elastomeren aushärten.

Die erfindungsgemäßen wäßrigen Dispersionen haben den weiteren Vorteil, daß sie auf textilen Materialien, wie Gewebe, Gestricke, Geflechte, Gelege oder Vliese gepflatscht oder im Tauchverfahren aufgebracht werden können und gegebenenfalls im Foulard abgepreßt werden können.

Des weiteren können viele Substrate, wie beispielsweise Papier, Textilien, mineralische Baustoffe, Kunststoffe, Holz und vielen anderen Unterlagen mit der erfindungsgemäßen Dispersion behandelt werden. Die Behandlung kann dabei z.B. durch Tauchen oder Tränken erfolgen.

Die erfindungsgemäßen wäßrigen Dispersionen werden zuerst wie oben beschrieben hergestellt, indem zuerst vorzugsweise eine Dispersion mit einem Feststoffgehalt von 30 bis 90 Gewichtsprozent, besonders bevorzugt von 40 bis 85 Gewichtsprozent hergestellt wird. Diese Dispersion wird in einem Rühr- oder Mischgerät, wie z.B. einem Z-Kneter,

Dissolver oder Rührer vorgelegt. Unter intensivem Mischen wird die gewünschte Wassermenge anfangs in kleinen Portionen, später, wenn die Viskosität abfällt, in größeren Portionen zugegeben, das Volumenverhältnis von kleiner zu großer Portion beträgt 1:2 bis 1:20, bevorzugt 1:2 bis 1:10, besonders bevorzugt 1:2 bis 1:5. Die Anzahl der kleinen Portionen beträgt 2 bis 20, bevorzugt 2 bis 10, besonders bevorzugt 2 bis 5. Die Anzahl der großen Portionen beträgt 2 bis 20, bevorzugt 2 bis 10, besonders bevorzugt 2 bis 5.

Nach jeder Wasserzugabe wird solange gerührt, gemischt oder geknetet, bis eine homogenen Masse erhalten wird. Die benötigte Zeit für den gesamten Mischvorgang hängt von dem verwendeten Mischwerkzeug ab und bewegt sich vorzugsweise im Rahmen von 1 bis 60 Minuten. Der Mischvorgang wird vorzugsweise bei Raumtemperatur und bei Normaldruck durchgeführt. Auch bei Temperaturen im Bereich von 5°C bis 60°C kann der Mischvorgang durchgeführt werden. Ein reduzierter oder erhöhter Druck ist prinzipiell möglich.

Das Aufbringen der derart hergestellten erfindungsgemäßen Dispersion auf textile Materialien erfolgt durch in der Textilveredelungsindustrie gängige Verfahren, wie Pflatschen, Tauchen mit oder ohne anschließendem Foulard, Rakeln oder Beschichten durch Walzenauftrag, Siebdruck oder Rasterwalzen oder Sprühen.

Das Trocknen und Vulkanisieren erfolgt in üblichen Wärmekanälen, die durch Heißluft oder Infrarotstrahlung oder andere Energiequellen temperiert werden können. Der bevorzugte Temperaturbereich ist 50 - 200°C. Da einige Textilarten nicht besonders temperaturbeständig sind, wird die obere Temperaturgrenze meist durch die Temperaturbeständigkeit des Textiles limitiert. Die Verweilzeit im Trockenofen ist von der Temperatur im Wärmekanal abhängig und ist bevorzugt 0,5 bis 30 Minuten.

Die erfindungsgemäß behandelten Textilien, Gewebe, Gestricke, Geflechte, Gelege oder Vliese haben folgende Vorteile:

Elastische Textilien wurden üblicherweise durch Verwendung von Mischgarnen aus Baumwolle und Kunstfasern, wie Nylon, Polyester, Polyurethan etc. erhalten. Diese Mischgarne werden meist verwebt oder verstrickt. Diese Art von Textilien sind schwierig zu verarbeiten und somit verhältnismäßig teuer.

Wird ein reines Baumwollmaterial, das gestrickt oder gewebt ist, mit der erfindungsgemäßen Dispersion ausgerüstet, wird nach der Ausrüstung ein textiles Material mit elastischen Eigenschaften erhalten. Zusätzlich wird ein angenehmer weicher Griff erzielt. Derartige Textilien eignen sich bevorzugt für Sportkleidung. Die Einsatzgebiete derartiger Textilien sind jedoch kaum begrenzt.

Ärmelmanschetten und Strukturrippen von Unterwäsche und Kleidung aus Wolle und Acrylfasern und/oder Baumwolle zeigen schlechte Formstabilität. Wird eine Ausrüstung mit der erfindungsgemäßen Dispersion durchgeführt, wird eine gute Formstabilität (Rückformeffekt) erreicht. Je nach Auftragsmenge kann ein mehr oder minder elastisches Verhalten erreicht werden.

Gerade im Bereich der hochwertigen Kleidung werden vom Verbraucher knitterfreie Textilien erwartet. Dies schränkte jedoch den möglichen Einsatz von Garnen fast auschließlich auf Kunstfasern ein.
Falls jedoch Gewebe aus Wolle, Baumwolle oder Gemische daraus oder Mischgewebe aus Wolle, Baumwolle mit Kunstfasern mit der erfindungsgemäßen Dispersion ausgerüstet werden, entstehen vorwiegend knitterfreie Textilien.

Gewebe aus Glasfasern fransen an den Schnittstellen sehr stark aus, ein Ausfransen der Schnittkanten wird durch die Behandlung verhindert. Glasstaub, der durch den Bruch der feinen Glasfasern entsteht, wird durch eine Ausrüstung mit der erfindungsgemäßen Dispersion fixiert. Des weiteren zeigt ein derartig ausgerüstetes Glasgewebe elastische Eigenschaften.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25°C. Sofern nicht anders angegeben, wurden die nachstehenden Beispiele bei einem Druck der umgebenden Atmosphäre, also etwa 1000 hPa, und bei Raumtemperatur, also bei etwa 22°C, bzw. bei einer Temperatur, die sich beim Zusammengeben der Reaktanden bei Raumtemperatur ohne zusätzliche Heizung oder Kühlung einstellt, durchgeführt.

**Beispiel 1**

I) Herstellung einer wäßrigen Dispersion von Kondensationskatalysator (B)

125 g Dibutylzinndilaurat werden zusammen mit 10 g Tributylphenolpolyglycolether (käuflich erhältlich unter der Bezeichnung "Sagopenat T130" bei der Hoechst AG) und 365 g Wasser emulgiert.

**Beispiel 2**

200 g $\alpha,\omega$-Dihydroxypolydimethylsiloxan mit einer Viskosität von 80 000 mPa•s und 5,00 g $[CH_3SiO_{3/2}]_{0,8}$ $[(CH_3)_2SiO]_{0,2}$ mit einem durchschnittlichen Molekulargewicht von 3000 werden vermischt. Anschließend wird die Mischung mit 25,0 g Wasser und 50 g einer 10 %igen Lösung eines Polyvinylalkohols mit einem Molekulargewicht von 36 000 und einer Verseifungszahl von 20 (käuflich erhältlich unter der Bezeichnung "Polyviol G 10/20" bei der Wacker-Chemie GmbH) in Wasser mit Hilfe eines Ultra-Turrax-Mischers in eine Emulsion überführt. Nach Hinzufügen von 2,8 g 3-(2-Aminoethylamino)propyl-funktionellem Polydimethylsiloxan mit einer Viskosität von 1000 mPa•s und einer Aminzahl von 0,3 (käuflich erhältlich unter der Bezeichnung "Finish WR 1300" bei der Wacker-Chemie GmbH, München) und 1,4 g der in Beispiel 1 unter I beschriebenen wäßrigen Dispersion von Kondensationskatalysator (B) wird eine weiße, standfeste wäßrige Dispersion erhalten, die mindestens 6 Monate lagerfähig ist.

**Beispiel 3**

100 g des Produktes, das nach Beispiel 2 erhalten wurde, wird in einem Z-Kneter vorgelegt und unter ständigem Kneten werden 100 g Wasser anfangs in Portionen zu 5 mal 5 g und später in Portionen zu 5 mal 10 g und zuletzt 25 g zugegeben. Die jeweils nächste Wasserzugabe erfolgt erst, wenn eine homogene Mischung erreicht ist.

Es wird eine wäßrige Dispersion von Organopolysiloxanen erhalten, die einen Festgehalt von 43 Gew.% enthält und eine Viskosität von 4.600 mPa•s aufweist.
150 g dieser so erhaltenen Dispersion werden unter leichtem Umrühren in 3 l Wasser gegossen. Es wird eine homogene wäßrige Dispersion mit einem Feststoffgehalt von 2 Gew.% erhalten.

Ein Baumwollgestrick mit einem Gewicht von 90 g/$m^2$ wird in die so erhaltene Dispersion getaucht und in einem Foulard mit einem Druck von 3 kp/$cm^2$ abgepreßt. In einem Heißluftofen wird 3 Min. bei 150°C getrocknet. Das Flächengewicht des Textiles beträgt nun 94 g/$m^2$.
Das Baumwollgestrick zeigt elastische Eigenschaften. Wird ein nicht behandeltes Gewebestück von 20 x 20 cm mit einer Zugkraft von 5 kp gestreckt, so werden nach 2 Min. Ruhezeit 16 x 25 cm gemessen.

Das beschichtete Gewebestück zeigt nach dem Streck- und Ruhevorgang wieder 20 x 20 cm.

**Beispiel 4**

100 g des Produktes, das nach Beispiel 2 erhalten wurde, werden mit einer Dissolverscheibe gerührt und unter ständigem Rühren werden 100 g Wasser anfangs in Portionen zu 5 mal 5 g und später in Portionen zu 5 mal 10 g und zuletzt 25 g zugegeben. Die jeweils nächste Wasserzugabe erfolgt erst, wenn eine homogene Mischung erreicht ist. Nun werden 10 l Wasser unter weiterem Rühren schnell zugegeben. Es wird eine homogene Dispersion mit einem Feststoffgehalt von 0,8 Gew.% erhalten.
Gestrickte Ärmelmanschetten aus Wolle - Acrylfaser - Mischgarn werden in die so erhaltene Dispersion getaucht und nach kurzem Abtropfen in einem Heißluftofen bei 100°C 10 Min. getrocknet. Die so ausgerüsteten Ärmelmanschetten zeigen deutlich verbesserte Dimensionsstabilität im Vergleich zu nicht ausgerüsteter Ware. Nach 3 Tagen Lagerzeit an der Luft wird dieser Effekt noch verstärkt.

**Beispiel 5**

100 g des Produktes, das nach Beispiel 2 erhalten wurde, werden mit einem Blattrührer mit hoher Geschwindigkeit gerührt und unter ständigem Rühren werden 100 g Wasser anfangs in Portionen zu 5 mal 5 g und später in Portionen zu 5 mal 10 g und zuletzt 25 g zugegeben. Die jeweils nächste Wasserzugabe erfolgt erst, wenn eine homogene Mischung erreicht ist.

Nun werden 16 l Wasser unter weiterem Rühren schnell zugegeben. Es wird eine homogene Dispersion mit einem Feststoffgehalt von 0,5 Gew.% erhalten.
Mit einer Pflatschwalze wird diese Dispersion auf ein Baumwoll-Polyester 80/20 Mischgewebe aufgebracht und in einem Heißluftofen bei 120°C 5 Min. getrocknet.
Das so behandelte Gewebe wird 3 Tage an der Luft gelagert. Nach starkem Knittern sind keine Falten oder Knitterstellen erkennbar.
Das unbehandelte Gewebe zeigt deutliche Knitterstellen und Falten nach der gleichen Knitterbehandlung.

**Beispiel 6**

100 g des Produktes, das nach Beispiel 2 erhalten wurde, wird in einem Z-Kneter vorgelegt und unter ständigem Kneten werden 100 g Wasser anfangs in Portionen zu 5 mal 5 g und später in Portionen zu 5 mal 10 g und zuletzt 25 g zugegeben. Die jeweils nächste Wasserzugabe erfolgt erst, wenn eine homogene Mischung erreicht ist.
Es wird eine wäßrige Dispersion von Organopolysiloxanen erhalten, die einen Festgehalt von 43 Gew.% enthält und eine Viskosität von 4.600 mPa • s aufweist.
150 g dieser so erhaltenen Dispersion werden unter leichtem Umrühren in 1 l Wasser gegossen. Es wird eine homogene, wäßrige Dispersion mit einem Feststoffgehalt von 5,5 Gew.% erhalten.
Mit einem Rakel wird diese Disperison auf ein Glasfasergewebe mit einem Gewicht von 120 g/$m^2$ aufgebracht. Nach 2 Min. Trocknen in einem Heißluftofen bei 180°C wird ein Gewebegewicht von 136 g/$m^2$ bestimmt.
Das so beschichtete Glasgewebe franst an den Schnittkanten nicht aus und zeigt elastische Eigenschaften. Auch bei starken Bewegungen wird kein Glasstaub freigesetzt.

**Beispiel 7**

Das Produkt, das nach Beispiel 2 erhalten wurde, wird mit einer Spachtel auf Glasgewebe mit einem Gewebegewicht von 240 g/$m^2$ aufgestrichen. In einem Heißluftofen wird 3 Minuten bei 150°C getrocknet. Es wird eine Beschichtung mit vielen Blasen erhalten. Das Beschichtungsgewicht beträgt 220 g/$m^2$. Eine dünne Beschichtung kann nicht erreicht werden. Beschichtungsverfahren, wie Tauchen oder Sprühen, sind nicht möglich.

**Beispiel 8**

100 g des Produktes, das nach Beispiel 2 erhalten wurde, und 100 g Wasser (in einer Portion) wurden mit einem Flügelrührer 1 Stunde gerührt. Es wurde keine homogene Dispersion erhalten. Viele Partikel mit sehr hoher Viskosität sind enthalten. Wird, wie in Beispiel 4 mit weiteren 10 l Wasser verdünnt, wird eine milchige unhomogene Flotte erhalten. An getauchten, foulardierten und bei 100°C über 10 Minuten getrockneten Geweben können keine Veränderungen oder Effekte beobachtet werden.

**Patentansprüche**

1. Wäßrige Dispersionen von Organopolysiloxanen, herstellbar unter Verwendung der Ausgangsstoffe

   (A) kondensationsfähige Gruppen aufweisendes Organopolysiloxan,
   (B) Kondensationskatalysator,
   (C) Organopolysiloxanharz mit einem Molekulargewicht von maximal 20 000,
   (D) basischen Stickstoff aufweisende Verbindungen und
   (E) Polyvinylalkohol mit der Maßgabe, daß der Feststoffgehalt der Dispersion 0,01 bis unter 30 Gew.% beträgt.

2. Wäßrige Dispersionen gemäß Anspruch 1, dadurch gekennzeichnet, daß Polyvinylalkohol (E) in Mengen von vorzugsweise 0,5 bis 10 Gewichtsteilen, bezogen auf 100 Gewichtsteile kondensationsfähige Gruppen aufweisendes Organopolysiloxan (A), eingesetzt wird.

3. Wäßrige Dispersionen gemäß Anspruch 1 oder 2, dadurch gekennzeichnet, daß als Polyvinylalkohol (E) solcher mit einem Molekulargewicht zwischen 20 000 und 100 000 und einer Verseifungszahl von größer 100 eingesetzt wird.

4. Wäßrige Dispersionen gemäß einem oder mehreren der Ansprüche 1 bis 3, dadurch gekennzeichnet, daß als kondensationsfähige Gruppen aufweisende Organopolysiloxane (A) solche der Formel

   $$RO\text{-}[SiR^1{}_2O]_n\text{-}R \qquad (I),$$

   worin

   R gleich oder verschieden sein kann und Wasserstoffatom oder Alkylrest mit 1 bis 6 Kohlenstoffatom(en) bedeutet,
   $R^1$ gleiche oder verschiedene Kohlenwasserstoffreste mit 1 bis 18 Kohlenstoffatom(en), die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet und
   n eine ganze Zahl von mindestens 30 ist,

   eingesetzt werden.

5. Wäßrige Dispersionen gemäß einem oder mehreren der Ansprüche 1 bis 4, dadurch gekennzeichnet, daß als Organopolysiloxanharz (C) solches aus Einheiten der allgemeinen Formel

   $$R^2{}_aSiO_{\frac{4-a}{2}} \qquad (II),$$

   wobei

   $R^2$ gleiche oder verschiedene Kohlenwasserstoffreste mit 1 bis 18 Kohlenstoffatom(en), die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet und
   a eine Zahl mit einem durchschnittlichen Wert zwischen 0,5 und 1,95 bedeutet,

   eingesetzt wird.

6. Wäßrige Dispersionen gemäß einem oder mehreren der Ansprüche 1 bis 5, dadurch gekennzeichnet, daß das Organopolysiloxanharz (C) ein Molekulargewicht von höchstens 10 000 hat.

7. Wäßrige Dispersionen gemäß einem oder mehreren der Ansprüche 1 bis 6, dadurch gekennzeichnet, daß als Organopolysiloxanharz (C) solches der Formel $[CH_3SiO_{3/2}]_{0,6\text{-}0,8}$ $[(CH_3)_2SiO]_{0,2\text{-}0,4}$ mit einem durchschnittlichen Molekulargewicht zwischen 500 und 6 000 eingesetzt wird.

**8.** Wäßrige Dispersionen gemäß einem oder mehreren der Ansprüche 1 bis 7, dadurch gekennzeichnet, daß Organopolysiloxanharz (C) in Mengen von 0,1 bis 100 Gewichtsteilen, bezogen auf 100 Gewichtsteile kondensationsfähige Gruppen aufweisendes Organopolysiloxan (A), eingesetzt wird.

**9.** Wäßrige Dispersionen gemäß einem oder mehreren der Ansprüche 1 bis 8, dadurch gekennzeichnet, daß es sich bei der Komponente (D) um Organosiliciumverbindungen mit mindestens einem basischen Stickstoff aufweisenden organischen Rest aus Einheiten der Formel

$$R^4_bY_cSi(OR^5)_dO_{\frac{4-b-c-d}{2}} \qquad (IV),$$

handelt, worin

| | |
|---|---|
| $R^4$ | gleich oder verschieden sein kann und einen einwertigen, von basischem Stickstoff freien organischen Rest bedeutet, |
| $R^5$ | gleich oder verschieden sein kann und Wasserstoffatom, einen Alkylrest, Alkalimetallkation, Ammonium- oder Phosphoniumgruppe bedeutet, |
| Y | gleich oder verschieden sein kann und einen einwertigen, SiC-gebundenen Rest mit basischem Stickstoff bedeutet, |
| b | 0, 1, 2, oder 3, |
| c | 0, 1, 2, 3 oder 4 und |
| d | 0, 1, 2 oder 3 ist, |

mit der Maßgabe, daß die Summe aus b, c und d kleiner oder gleich 4 ist und pro Molekül mindestens ein Rest Y anwesend ist.

**10.** Verfahren zur Herstellung von wäßrigen Dispersionen gemäß einem oder mehreren der Ansprüche 1 bis 9, dadurch gekennzeichnet, daß Organopolysiloxanharz (C) in dem kondensationsfähige Gruppen aufweisenden Organopolysiloxan (A) gelöst wird und mit Polyvinylalkohol (E) und Wasser sowie gegebenenfalls den weiteren Komponenten emulgiert wird.

**11.** Verfahren zur Herstellung von wäßrigen Dispersionen gemäß einem oder mehreren der Ansprüche 1 bis 10, dadurch gekennzeichnet, daß das Wasser zuerst in kleinen Portionen und später in größeren Portionen zugegeben und homogen vermischt wird.

**12.** Verwendung einer wäßrigen Dispersion nach einem oder mehreren der Ansprüche 1 bis 9 oder hergestellt nach Anspruch 10 oder 11, dadurch gekennzeichnet, daß textile Materialien mit dieser wäßrigen Dispersion ausgerüstet werden.

Europäisches Patentamt

# EUROPÄISCHER RECHERCHENBERICHT

Nummer der Anmeldung
EP 96 10 6091

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 419 986 (WACKER CHEMIE GMBH) 3.April 1991<br>* Anspruch 1 *<br>& US-A-5 045 231 (R. BRAUN)<br>--- | 1 | C08J3/03<br>C08L83/04 |
| D,X | EP-A-0 572 006 (WACKER CHEMIE GMBH) 1.Dezember 1993<br>* Seite 8, Zeile 21 - Zeile 22; Ansprüche 1-10 * | 1-11 | |
| Y | * Seite 8, Zeile 38 - Zeile 39 *<br>--- | 12 | |
| Y | "Ullmanns Encyklopädie der technischen Chemie, 4. Auflage, Band 23,Textilhilfsmittel: Silicon-Dispersionen" , VERLAG CHEMIE , WEINHEIM XP002005459<br>* Seite 82 - Seite 83 *<br>----- | 12 | |

RECHERCHIERTE SACHGEBIETE (Int.Cl.6)
C08J
C08L

Der vorliegende Recherchenbericht wurde für alle Patentansprüche erstellt

| Recherchenort | Abschlußdatum der Recherche | Prüfer |
|---|---|---|
| MÜNCHEN | 12.Juni 1996 | Hoffmann, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)